(19) Europäisches Patentamt

European Patent Office

Office européen des brevets

(11) **EP 0 935 238 A2**

(12) **EUROPÄISCHE PATENTANMELDUNG**

(43) Veröffentlichungstag:
11.08.1999 Patentblatt 1999/32

(51) Int Cl.⁶: **G10L 5/06**

(21) Anmeldenummer: 99200210.5

(22) Anmeldetag: 26.01.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.02.1998 DE 19804603**

(71) Anmelder:
• **Philips Patentverwaltung GmbH**
**22335 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder: **Klakow, Dietrich, Dr.**
**Röntgenstrasse 24, 22335 Hamburg (DE)**

(74) Vertreter: **Volmer, Georg, Dipl.-Ing. et al**
**Philips Patentverwaltung GmbH,**
**Röntgenstrasse 24**
**22335 Hamburg (DE)**

(54) **Verfahren zur Spracherkennung unter Verwendung von statistischen Sprachmodellen**

(57) In einem natürlichen Text treten die verschiedenen Wörter mit stark unterschiedlicher durchschnittlicher Häufigkeit auf. Um ein optimiertes Vokabular zu erhalten, das zu einem verbesserten Sprachmodell führt und auch zu einer verbesserten Erkennung insgesamt, werden Wortketten von zwei und mehr Wörtern zusammengefaßt, die mit genügender Häufigkeit auftreten. Es wird ein Verfahren beschrieben, das mit Hilfe einer geordneten Liste iterativ solche häufig vorkommenden Wortketten zusammenfaßt.

EP 0 935 238 A2

**Beschreibung**

Die Erfindung betrifft das Gebiet der Spracherkennung und insbesondere die Erzeugung von Modellen für die Spracherkennung.

Bei der Spracherkennung wird das zu erkennende Sprachsignal zu regelmäßigen Zeitpunkten abgetastet, und es werden aus den Abtastwerten Testsignale gewonnen, die den Sprachabschnitt zwischen zwei Abtastungen kennzeichnen. Diese Testsignale werden parallel mit einer Anzahl Referenzsignale verglichen, wobei Folgen von Referenzsignalen Wörter eines vorgegebenen Vokabulars darstellen. Diese Referenzsignale bzw. Folgen von Referenzsignalen werden aus einem Trainings-Sprachsignal gewonnen und stellen ein akustisches Modell für die Erkennung eines Sprachsignals dar. Beim Vergleich jedes Testsignals mit den Referenzsignalen werden Bewertungswerte abgeleitet, die das Ausmaß der Übereinstimmung des Testsignals mit dem Referenzsignal bzw. den Unterschied zwischen beiden Signalen angeben.

Auf diese Weise entstehen bei einem Sprachsignal aus zusammenhängend gesprochenen Wörtern ständig "erkannte", d.h. ermittelte Wörter gleichzeitig oder auch überlappend, da wegen der Ungenauigkeiten beim Sprechen eine exakte Erkennung fast nie möglich ist. Um aus diesen entstehenden Wörtern möglichst genau den gesprochenen Satz zu ermitteln, werden zusätzlich Sprachmodellwerte verwendet, die die Wahrscheinlichkeit für Folgen von Wörtern angeben. Dadurch werden die Bewertungswerte für Wortfolgen ergänzt, wobei Wörter, die mit einer relativ hohen Zuverlässigkeit ermittelt wurden, gelöscht werden, wenn sie in einem Zusammenhang mit anderen Wörtern sehr unwahrscheinlich sind. Diese Sprachmodellwerte werden aus dem Trainings-Text bzw. -Korpus ermittelt, der dem Trainings-Sprachsignal entspricht.

Die Wörter, die den Folgen von Referenzsignalen zugeordnet sind, bilden ein vorgegebenes Vokabular mit den in der natürlichen Sprache vorkommenden Wörtern. Diese Wörter kommen in natürlichen Texten mit sehr unterschiedlicher Häufigkeit vor, insbesondere viele kurze Wörter, deren akustische Erkennung bzw. Unterscheidung häufig schwierig ist, kommen mit größerer Häufigkeit vor. Auch führt ein solches Vokabular zu einem nicht sehr günstigen Sprachmodell.

Aufgabe der Erfindung ist es, ein Verfahren anzugeben, mit dem die Erkennung von Wörtern in einem Sprachsignal verbessert werden kann. Dazu gehört insbesondere die Verbesserung des Sprachmodells, d.h. die Ermittlung besserer Sprachmodellwerte, und die Verringerung der Perplexität. Die Perplexität kann vereinfacht als Maß für die Mehrdeutigkeit betrachtet werden, mit der die Folge von Wörtern in einem Sprachsignal angegeben werden kann, wobei eine große Perplexität eine große Mehrdeutigkeit bedeutet.

Diese Aufgabe wird gemäß der Erfindung allgemein dadurch gelöst, daß aus dem Trainings-Sprachsignal ein neues Vokabular gebildet wird, das nicht nur Wörter, sondern auch Wortgruppen enthält, wobei Wörter und Wortgruppen im folgenden allgemein auch mit Satzelementen bezeichnet werden. Dieses neue Vokabular enthält also zusätzliche Satzelemente. In Einzelfällen können Wörter des ursprünglichen Vokabulars wegfallen, wenn auch die Wahrscheinlichkeit hierfür sehr gering ist. Die zusätzlichen Sprachelemente müssen in dem Trainings-Sprachsignal mit mindestens einer vorgegebenen Häufigkeit vorkommen. Mit Hilfe dieses neuen Vokabulars werden neue Sprachmodellwerte aus dem Trainings-Sprachsignal ermittelt. Mit diesem neuen Vokabular und den neuen Sprachmodellwerten werden anschließend Test-Sprachsignale verarbeitet. Bei dieser Verarbeitung werden die Wörter aus dem Test-Sprachsignal mit größerer Zuverlässigkeit ermittelt.

Die Bildung des neuen Vokabulars kann auf verschiedene Weise erfolgen. Beispielsweise kann zuerst das häufigste Wortpaar ermittelt und zu einem neuen Vokabulareintrag zusammengefaßt werden. Im Trainings-Korpus werden dann alle entsprechenden Wortpaare durch das neue Satzelement ersetzt. Aus diesem veränderten Trainings-Sprachsignal kann dann wieder das häufigste Paar ermittelt werden, und so weiter. Nach einer vorteilhaften Ausgestaltung des erfindungsgemäßen Verfahrens wird die Bildung des neuen Vokabulars dadurch erreicht, daß zuerst alle Kombinationen, das sind zuerst alle Paare von Satzelementen, in dem Trainings-Sprachsignal ermittelt werden. Diese Paare werden in einer Liste nach einem vorgegebenen Kriterium geordnet eingefügt. Danach wird beginnend mit dem ersten Eintrag der Liste geprüft, ob der Anfang oder das Ende des darin enthaltenen Paares als Ende bzw. Anfang in einem Paar niedrigerer Ordnung in der Liste enthalten ist, und ein solches Paar wird gelöscht. Auf diese Weise wird die gesamte Liste abgearbeitet. Die dabei übrig bleibenden Listeneinträge ersetzen als neue Satzelemente die entsprechende Kombination, d.h. das entsprechende Paar von Satzelementen im Trainings-Sprachsignal. Dann werden die Schritte wiederholt, d.h. es werden wieder Kombinationen bzw. Paare von Satzelementen gebildet, wobei ein Teil des Paares oder auch beide Teile bereits aus einem im ersten Durchgang gebildeten Paar bestehen kann. Diese neue Liste wird dann wieder in der beschriebenen Weise verarbeitet, und diese Folge von Schritten wird wiederholt, bis keine gewinnbringenden Kombinationen von Satzelementen ermittelt werden.

Die so ermittelten neuen Satzelemente, die Wortfolgen aus zwei oder mehr Wörtern umfassen, werden in das vorhandene Vokabular eingefügt, wodurch das neue Vokabular gebildet wird. Mit diesem neuen Vokabular werden aus dem Trainings-Sprachsignal neue Sprachmodellwerte ermittelt.

Wie bereits erwähnt, werden zuerst zweckmäßig Paare von Wörtern bzw. Satzelementen ermittelt. Es können aber auch Tripel von Satzelementen ermittelt werden, wobei solche Tripel zusammengefaßt werden, in denen nur das erste und das letzte Wort bzw. Satzelement gleich ist. Wenn solche verschiedenen Tripel mit etwa gleicher Häufigkeit auftreten, bedeutet dies, daß das mittlere Wort in dem Tripel wenig aussagekräftig für das Sprachmodell ist. Zweckmäßig können Tripel ermittelt werden, nach dem das Verfahren für die Ermittlung von Paaren von Satzelementen abgeschlossen ist.

Eine zweckmäßige Vereinfachung bei der Bildung der geordneten Liste besteht darin, daß nur solche Kombinationen von Satzelementen überhaupt in die Liste aufgenommen werden, die wenigstens eine vorgegebene Anzahl Male im Trainings-Sprachsignal ermittelt sind. Diese Anzahl kann empirisch gewählt werden, da sie nicht sehr kritisch ist.

Für das Kriterium, nach dem die Kombinationen von Satzelementen in der Liste geordnet werden, gibt es verschiedene Möglichkeiten. Die einfachste Möglichkeit ist die Häufigkeit der entsprechenden Kombination von Satzelementen. Diese ist am einfachsten zu ermitteln.

Eine andere Möglichkeit für das Kriterium ist die wechselseitige Information von Wortpaaren nach folgender Gleichung

$$N(vw) \log \left( \frac{N(vw) N}{N(v) N(w)} \right)$$

Auch die Änderung $\Delta F$ der Unigrammwahrscheinlichkeit des Trainings-Korpus kann verwendet werden. Diese ist wie folgt definiert

$$
\begin{aligned}
\Delta F \; = \; & \sum_{u \in V} \bar{N}(u) \log \frac{\bar{N}(u)}{\bar{N}} \; - \; \sum_{u \in V} N(u) \log \frac{N(u)}{N} \\
= \; & N(vw) \log \; N(vw) \\
& + (N(v) - N(vw)) \log \; (N(v) - N(vw)) \\
& + (N(w) - N(vw)) \log \; (N(w) - N(vw)) \\
& - (N - N(vw)) \log \; (N - N(vw)) \\
& - N(v) \log \; N(v) \\
& - N(w) \log \; N(w) \\
& + N \log \; N
\end{aligned}
$$

Bei der Bildung von neuen Satzelementen, die drei oder mehr Wörter enthalten, können kürzere Folgen von Wörtern, z.B. Wortpaare enthalten sein, die in vorhergehenden Schritten gebildet worden sind. Die Häufigkeit des Auftretens solcher kürzerer Satzelemente verringert sich, wenn diese zum Teil in längere Satzelemente aufgenommen werden. Dabei kann es geschehen, daß die Häufigkeit solcher kürzeren Satzelemente unter eine vorgegebene Häufigkeit fällt, insbesondere die Häufigkeit, die notwendig ist, damit eine Kombination von Satzelementen in die geordnete Liste bei der Bildung des neuen Vokabulars aufgenommen wird. In diesem Fall ist es zweckmäßig, solche kürzeren Satzelemente wieder in kleinere Bestandteile zu zerlegen, beispielsweise Wortpaare in einzelne Wörter. Dies kann nach jeder Folge der Schritte bei der Bildung des neuen Vokabulars mittels der geordneten Liste erfolgen oder nach einer vorgegebenen Anzahl solcher Folgen. Nach solch einer Aufspaltung werden dann erneut die angegebenen Schritte für die Bildung des neuen Vokabulars durchgeführt.

Es sei bemerkt, daß bei Satzelementen mit mehreren Wörtern auch solche mit Vertauschung der Reihenfolge einzelner Wörter zusammengefaßt und gleich behandelt werden können.

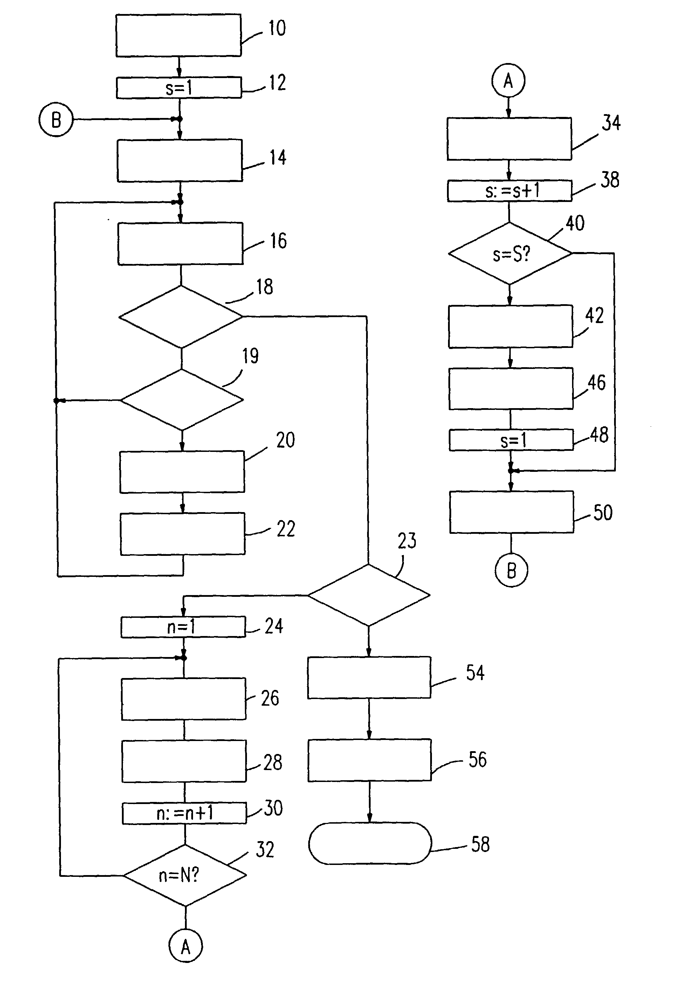

Ein Ausführungsbeispiel des erfindungsgemäßen Verfahrens wird nachfolgend anhand des in der Zeichnung dargestellten Flußdiagramms näher erläutert.

Ausgangspunkt des Verfahrens ist im Block 10 der Trainings-Sprachtext und das dafür verwendete Vokabular aus einzelnen Wörtern. Im Block 12 wird ein Schleifenzähler s, dessen Bedeutung später erläutert wird, auf den Wert 1 gesetzt.

Im Block 14 werden alle Paare von Wörtern ermittelt, die im Trainingstext vorkommen, und deren Häufigkeit gezählt. Diese Werte werden zwischengespeichert.

Wenn die Wortpaare im gesamten Trainingstext ermittelt und gespeichert sind, werden im Block 16 nacheinander alle Wortpaare aus diesem Zwischenspeicher wieder ausgelesen. Im Block 18 wird geprüft, ob der Zwischenspeicher vollständig verarbeitet ist. Solange dies nicht der Fall ist, geht das Verfahren zu einer Abfrage 19, in der geprüft wird, ob die zu dem betreffenden Wortpaar gespeicherte Anzahl größer einer Schwelle T ist. Wenn dies nicht der Fall ist, wird im Block 16 das nächste Wortpaar aus dem Zwischenspeicher ausgelesen. Wenn diese Häufigkeit T jedoch überschritten ist, wird im Block 20 für dieses Wortpaar der Wert eines Kriteriums ermittelt, insbesondere eines der vorher erwähnten Kriterien, z.B. im einfachsten Fall die Häufigkeit selbst. Danach wird dieses Wortpaar im Block 22 in eine Liste eingefügt, und zwar an einer Stelle, die von dem Wert des Kriteriums abhängt. Danach kehrt der Ablauf wieder zum Block 16 zurück, wo das nächste Wortpaar ausgelesen wird.

Auf diese Weise werden die Blöcke 20 und 22 wiederholt durchlaufen, und es wird schließlich eine Liste gebildet, in der alle Wortpaare entsprechend dem Kriterium geordnet enthalten sind, die häufiger als der Wert T im Trainings-Sprachsignal aufgetreten sind.

Wenn schließlich in der Abfrage 18 festgestellt wird, daß alle Wortpaare verarbeitet sind, geht das Verfahren zum Block 23 weiter, wo geprüft wird, ob die im Block 22 gebildete Liste überhaupt Einträge enthält. Dies ist bei den ersten Durchläufen praktisch immer der Fall, und damit geht der Ablauf zum Block 24 weiter, wo ein Zähler für die Listenplätze auf den Wert $n = 1$ gesetzt wird. Damit wird der erste Listenplatz adressiert, in dem das Wortpaar mit dem günstigsten Wert des Kriteriums, beispielsweise der höchsten Häufigkeit steht. Dann wird im Block 26 geprüft, ob das erste Wort dieses Wortpaares als letztes Wort eines anderen Paares in der Liste vorkommt, und wenn dies der Fall ist, wird dieses letztere Wortpaar gelöscht. Danach oder parallel dazu wird das zweite Wort dieses Wortpaares mit dem ersten Wort aller Wortpaare in der Liste verglichen, und bei Übereinstimmung wird das entsprechende Wortpaar ebenfalls gelöscht. Dies ist mit dem Block 28 angedeutet. Danach wird im Block 30 die Adresse n der Listenplätze um eine Einheit erhöht, und im Block 32 wird geprüft, ob dies der letzte Listenplatz N war.

Dies ist nach dem ersten Listenplatz normalerweise nicht der Fall, und das Verfahren geht zurück auf den Block 26, wo von dem nun adressierten Wortpaar wieder das erste Wort mit dem letzten Wort aller Wortpaare in der restlichen Liste verglichen wird und so weiter.

Wenn die geordnete Liste vollständig abgearbeitet ist, wird dies in der Abfrage 32 dadurch festgestellt, daß der letzte Listenplatz N adressiert ist, und damit geht der Ablauf nun zum Block 34 weiter, wo der in der Liste gebliebene Inhalt, der im ersten Durchgang nur Wortpaare enthält, zwischengespeichert wird.

Danach wird im Block 38 der Schleifenzähler s um eine Einheit erhöht, und in der Abfrage 40 wird geprüft, ob damit eine vorgegebene Anzahl S von Durchläufen durch die Schleife erreicht ist. Solange dies nicht der Fall ist, wird danach im Block 50 der Listeninhalt in den Trainingstext eingefügt. Dies kann z.B. dadurch geschehen, daß die entsprechenden Wortpaare im Trainingstext als Einheit markiert werden.

Nun kehrt das Verfahren wieder zum Block 14 zurück, wobei nun aber nicht nur Paare von Wörtern, sondern allgemein Paare von Satzelementen gebildet werden, wobei ein Satzelement ein Wort, ein Wortpaar oder bei mehrfachen Durchläufen durch die Schleife eine längere Wortkette sein kann. Es ist dabei auch möglich, daß bereits nach dem ersten Durchgang ein Paar aus zwei Wortpaaren gebildet wird, so daß auf diese Weise möglicherweise ein neues Satzelement aus vier Wörtern entsteht. Der weitere Ablauf über die Blöcke 16 bis 40 erfolgt in der gleichen Weise, wie vorher beschrieben wurde.

Wenn im Block 40 festgestellt wird, daß eine vorgegebene Anzahl S von Durchläufen durch die Schleife erfolgt ist, geht der Ablauf nun mit dem Block 42 weiter. Darin wird berücksichtigt, daß einige Vorkommen eines Satzelements, das nicht nur aus einem einzelnen Wort besteht, sondern zwei oder mehr Wörter umfaßt, mit einem anderen Satzelement zu einer Einheit zusammengefaßt sind, wodurch die Anzahl der übrigen Vorkommen dieses Satzelementes unter eine vorgegebene Schwelle fallen kann. Wenn dies der Fall ist, wird im Block 46 dieses Satzelement wieder in seine vorhergehenden Bestandteile aufgespalten, d.h. dieses Satzelement in der im Block 34 gebildeten akkumulierten Zwischenspeicherung der Listeninhalte gelöscht. Danach wird im Block 48 der Schleifenzähler s wieder auf den Wert 1 gesetzt. Danach werden wieder, wie beschrieben, im Block 50 alle zum ursprünglichen Vokabular neu gebildeten Satzelemente in den Trainings-Sprachtext eingefügt, womit ein weiterer Durchlauf der Schleife ausgeführt ist.

Wenn bei einem derartigen Durchlauf bei der Abfrage 23 festgestellt wird, daß im Block 22 eine leere Liste gebildet worden ist, d.h. es werden keine neuen Paare von Satzelementen gefunden, die mit mindestens vorgegebener Häufigkeit auftreten, ist die Bildung des neuen Vokabulars abgeschlossen, und der Ablauf geht zum Block 54 weiter, wo die im Block 34 zwischengespeicherten Listeninhalte endgültig in das ursprüngliche Vokabular eingefügt werden und das neue Vokabular ergeben. Mit Hilfe dieses neuen Vokabulars wird dann im Block 56 ein neues Sprachmodell gebildet, d.h. neue Sprachmodellwerte erzeugt.

Damit gelangt das Verfahren an ein Ende 58, bei dem nunmehr ein neues Vokabular und neue Sprachmodellwerte vorliegen, und damit können neue, unbekannte Test-Sprachsignale verarbeitet werden.

Es sei bemerkt, daß die Blöcke 12, 38, 40 und 48 wegfallen können, wenn bei jedem Durchlauf der Schleife die mit dem Block 42 angegebene Prüfung stattfindet.

**Patentansprüche**

1. Verfahren zum Ermitteln von Wörtern in einem Test-Sprachsignal, das zu regelmäßigen Zeitpunkten abgetastet wird, wobei aus den Abtastwerten Testsignale gewonnen werden, die mit Referenzsignalen verglichen werden, um Bewertungswerte für die Ermittlung der Wörter abzuleiten, wobei Folgen von Referenzsignalen Wörter darstellen und aus einem Trainings-Sprachsignal gewonnen werden, und bei der Ermittlung der Wörter zusätzlich Sprachmodellwerte benutzt werden, die aus einem Trainings-Korpus gewonnen werden und die Wahrscheinlichkeit für Folgen von Wörtern darin angeben, <u>dadurch gekennzeichnet</u>,
daß aus dem Trainings-Sprachsignal ein neues Vokabular gebildet wird, das Satzelemente bestehend aus Wörtern und Wortgruppen enthält, die in dem Trainings-Sprachsignal mit mindestens vorgegebener Häufigkeit vorkommen, und für dieses Vokabular neue Sprachmodellwerte aus dem Trainings-Sprachsignal ermittelt werden, und daß für die Ermittlung der Wörter aus dem Test-Sprachsignal sowohl das neue Vokabular als auch die neuen Sprachmodellwerte verwendet werden.

2. Verfahren nach Anspruch 1, <u>dadurch gekennzeichnet</u>,
daß die Bildung des neuen Vokabulars folgende Schritte umfaßt:

   a) Ermitteln von Kombinationen von Satzelementen im Trainings-Sprachsignal,
   b) Bildung einer Liste der ermittelten Kombinationen von Satzelementen, die nach einem vorgegebenen Kriterium geordnet ist,
   c) beginnend mit der ersten Kombination von Satzelementen in der Liste werden alle solche Satzelemente aus der Liste gelöscht, die das letzte Satzelement einer Kombination höherer Ordnung am Anfang oder das erste Satzelement einer Kombination höherer Ordnung am Ende haben,
   d) die dabei übrig bleibenden Kombinationen von Satzelementen ersetzen als neue Satzelemente die entsprechenden Kombinationen von Satzelementen im Trainings-Sprachsignal,
   e) die Schritte a) bis d) werden wiederholt, bis im Schritt b) nur eine leere Liste gebildet wird.

3. Verfahren nach Anspruch 2, <u>dadurch gekennzeichnet</u>,
daß die Kombination von Satzelementen ein Paar von Satzelementen ist.

4. Verfahren nach Anspruch 2, <u>dadurch gekennzeichnet</u>,
daß die Kombination von Satzelementen ein Tripel von Satzelementen ist, in dem nur das erste und das letzte Satzelement gleich ist.

5. Verfahren nach Anpruch 3 und 4, <u>dadurch gekennzeichnet</u>,
daß zunächst nur für Paare von Satzelementen die Schritte a) bis e) wiederholt ausgeführt werden, bis nur eine leere Liste gebildet wird, und danach für Tripel von Satzelementen die Schritte a) bis e) wiederholt ausgeführt werden.

6. Verfahren nach einem der Ansprüche 2 bis 5, <u>dadurch gekennzeichnet</u>,
daß nur solche Kombinationen von Satzelementen in die Liste aufgenommen werden, die wenigstens eine vorgegebene erste Anzahl Male in dem Trainings-Sprachsignal ermittelt worden sind.

7. Verfahren nach Anspruch 2, <u>dadurch gekennzeichnet</u>, daß das Kriterium die Häufigkeit der Kombination von Satzelementen ist.

8. Verfahren nach Anspruch 2, <u>dadurch gekennzeichnet</u>,
daß das Kriterium die gegenseitige Information

$$N(vw) \log \left( \frac{N(vw)\,N}{N(v)\,N(w)} \right)$$

ist.

9. Verfahren nach Anspruch 2, <u>dadurch gekennzeichnet</u>,
daß das Kriterium die Änderung $\Delta F$ der Unigrammwahrscheinlichkeit im Trainings-Korpus

$$\Delta F \;\; = \;\; \sum_{u \in V} \bar{N}(u) \log \frac{\bar{N}(u)}{\bar{N}} \;\; - \;\; \sum_{u \in V} N(u) \log \frac{N(u)}{N}$$

ist.

10. Verfahren nach Anspruch 2, <u>dadurch gekennzeichnet</u>, daß nach einer vorgegebenen Anzahl Wiederholungen der Schritte a) bis d) ein Satzelement, dessen Anzahl des Auftretens durch das Ersetzen von Kombinationen von Satzelementen unter eine vorgegebene zweite Anzahl fällt, in wenigstens zwei darin enthaltene einfachere Satzelemente aufgeteilt wird und dann die Schritte a) bis d) erneut wiederholt werden.